(19) Europäisches Patentamt
European Patent Office
Office européen des brevets

(11) **EP 3 299 440 A1**

(12) **EUROPÄISCHE PATENTANMELDUNG**

(43) Veröffentlichungstag:
28.03.2018 Patentblatt 2018/13

(51) Int Cl.:
*C10G 3/00* (2006.01)  *B01J 38/12* (2006.01)
*B01J 29/00* (2006.01)  *B01J 29/04* (2006.01)

(21) Anmeldenummer: **16190331.5**

(22) Anmeldetag: **23.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Evonik Degussa GmbH**
**45128 Essen (DE)**

(72) Erfinder:
• **RESCHETILOWSKI, Wladimir**
**01445 Radebeul (DE)**
• **GILLE, Torsten**
**01069 Dresden (DE)**
• **BUSSE, Oliver**
**01067 Dresden (DE)**

(54) **VERFAHREN ZUR STEUERUNG DES PRODUKTSPEKTRUMS BEIM KATALYTISCHEN CRACKEN VON OXYGENATEN AM KATALYSATOR MIT HOHER LANGZEITSTABILITÄT**

(57)     Die Erfindung liefert eine neuartige Methode zur gesteuerten Erzeugung wertvoller industrieller Grundchemikalien bei der heterogen katalysierten Umsetzung von biogenen und industriellen Reststoffen auf Basis von Oxygenaten. Hierfür wurde ein maßgeschneiderter, langzeitstabiler Katalysator in Kombination mit einem oxidativen Regenerationsprogramm entwickelt. Der Syntheseweg dieses Katalysators erlaubt die Variation des während der Spaltreaktion gefundenen Produktspektrums. Das dabei entwickelte oxidative Regenerationsprogramm des Katalysators stellt durch die Wahl der Regenerationsparameter die Möglichkeit bereit, dieses Produktspektrum in einem weiten Bereich während der Reaktion flexibel einzustellen. Durch die entwickelte Prozessführung kann auf die Anwendung eines separaten Regenerators verzichtet werden.

Fig. 3

**Beschreibung**

Die Erfindung befasst sich mit dem katalytischen Cracken von Oxygenaten an einem bestimmten Katalysatorsystem.

Oxygenate sind chemische Substanzen, die ausschließlich aus Kohlenstoff, Wasserstoff und Sauerstoff bestehen. In einem Oxygenat sind demnach immer genau diese drei Elemente enthalten; kein weiteres Element ist Bestandteil der Verbindung. Manchmal werden Oxygenate auch als "sauerstoffhaltige Kohlenwasserstoffe" beschrieben, was aber in sich widersprüchlich ist. Verbindungen aus den Substanzklassen der Ether, Ester und der Fettsäuren sind typische Beispiele für Oxygenate.

Das Cracken ist ein chemischer Prozess bei dem zumindest eine Ausgangsverbindung in Gegenwart eines Hilfsstoffes in mehrere Zielsubstanzen umgewandelt wird. Bei dem Hilfsstoff handelt es sich in der Regel um ein Gas. Der Hilfsstoff reagiert teilweise mit den unmittelbaren Spaltprodukten zu den Zielsubstanzen. Man unterscheidet solche Crackverfahren, die außerdem in Gegenwart eines (in der Reaktion nicht verbrauchten) Katalysators durchgeführt werden und solche Verfahren, die unkatalysiert betrieben werden.

Technisch besonders bedeutsam ist das Cracken von Gemischen aus längerkettigen Kohlenwasserstoffen wie z.B. Naphtha in Gegenwart von Wasserdampf als Hilfsstoff. Dabei entstehen viele kurzkettige Kohlenwasserstoffe und andere Nebenprodukte. Dieser Prozess wird "Steamcracking" genannt und dient zur Herstellung der Basisprodukte der Petro-Folgechemie. Er wird in den allermeisten Raffinerien ausgeübt.

Das katalytische Cracken von Oxygenaten hat hingegen bislang kaum technische Relevanz erlangt. Eine Erklärung hierfür könnte sein, dass die Oxygenate in der petrochemischen Wertschöpfungskette weiter hinten stehen als Kohlenwasserstoffe und deswegen ein vergleichsweise teurer Rohstoff sind. Solange es möglich ist, aus preisgünstigen Kohlenwasserstoffen die gewünschten Zielsubstanzen zu steamcracken, besteht kein industrielles Interesse am Cracken von Oxygenaten.

Allerdings lassen sich Oxygenate auch auf biologischem Wege aus nachwachsenden Rohstoffen erzeugen, so wie etwa die Vergärung von Zucker zu Ethanol oder der Gewinnung von Fettsäuren aus Pflanzenteilen. Außerdem fallen einige Oxygenate als industrielle Abfallstoffe an, die bislang lediglich thermisch genutzt, nicht aber stofflich verwertet wurden. Oxygenate kommen somit als Grundstoff für die nachhaltige Herstellung von Basischemikalien in Betracht und zwar durch katalytisches Cracken.

Ein Verfahren zum katalytischen Cracken von Oxygenaten ist aus

O. Busse, K. Räuchle, W. Reschetilowski: Hydrocracking of Ethyl Laurate on Bifunctional Micro-/Mesoporous Zeolite Catalysts. ChemSusChem 3 (2010) 5, 563-565 DOI: 10.1002/cssc.200900234

bekannt.

Hier wird ein besonderes, bifunktionales Katalysatorsystem eingesetzt, welches sowohl die Spaltung der Oxygenate (Hydrogenolyse), als auch die Hydrierung der Vor-, Zwischen- und Endprodukte katalysiert. Als Hilfsstoff wird Wasserstoff eingesetzt, der sowohl in der Hydrogenolyse als auch in der Hydrierung verbraucht wird. Das Verfahren wird dementsprechend als Hydrocracken bezeichnet. Bei dem gespaltenen Oxygenat handelte es sich um Laurinsäureethylester; die am Ende erhaltenen Produkte waren Alkene mit zwei bis vier Kohlenstoffatomen, sowie Alkane und Aromaten im Siedebereich der Benzin- und Dieselkraftstoffe. Bei dem bifunktionalen Katalysatorsystem handelte um saure Alumosilicate von Typ Al-MCM-41 / ZSM-5, welche mit Nickel und Molybdän beladen waren.

Im Labormaßstab konnte somit gezeigt werden, dass sich an diesem Katalysatorsystem Oxygenate durch Hydrocracken in Ethen, Propen, 1-Buten, Isobuten, cis-2-Buten und trans-2-Buten umwandeln lassen. Da diese Olefine wiederum als Ausgangsstoffe für Herstellung von Spezialchemikalien benötigt werden, besteht ein wirtschaftliches Interesse daran, dieses Verfahren zur industriellen Reife weiterzuentwickeln.

In ihrer späteren Veröffentlichung

T. Gille, O. Busse, W. Reschetilowski: Influence of metal loading on hydrocracking of rapeseed oil using bifunctional micro/mesoporous composite materials DGMK-Conference "New technologies and alternative feedstocks on petrochemestry and refining" DGMK-Tagungsbericht 2013-2, 187-194

hat die Arbeitsgruppe untersucht, wie sich der Metallgehalt des bifunktionalen Katalysatorsystems beim Hydrocracken von Rapsöl auf die Produktverteilung sowie auf die Desaktivierung des Katalysators auswirkt.

Desaktivierung bedeutet, dass der Katalysator über die Zeit seine Fähigkeit verliert, die Reaktion in der gewünschten Weise zu beschleunigen. Desaktivierung bedeutet nicht zwangsläufig, dass der Katalysator überhaupt nicht mehr katalytisch wirkt, sondern beschreibt vielmehr einen Alterungszustand, in dem der Katalysator die Bildung von unerwünschten Nebenprodukten begünstigt. Der Prozess wird dadurch unwirtschaftlich.

Für einen industriellen Prozess ist es daher von großer Bedeutung, die Desaktivierung des Katalysators möglichst zu vermeiden, um möglichst viel gewünschtes Produkt mit hoher Effizienz erzeugen zu können.

Die Desaktivierung von den zu Rede stehenden Katalysatorsystemen beim Hydrocracken von Oxygenaten ist laut Gille et al. auf die zunehmende Ablagerung von Koks auf den aktiven Zentren des Katalysators zurückzuführen. Versuche zeigen, dass es mit zunehmender Betriebsdauer schwieriger wird, den Koks von dem Katalysator wieder zu entfernen und ihn dadurch zu reaktivieren.

Aus diesem Stand der Technik ergibt sich die Aufgabe, das bekannte Verfahren zum Hydrocracken von Oxygenaten hinsichtlich seiner industriellen Tauglichkeit weiterzuentwickeln. Insbesondere soll die bis zu seiner Desaktivierung verfügbare Standzeit des Katalysators besser ausgenutzt werden. Ein weiteres Ziel ist es, die Produktausbeute hinsichtlich der Alkene zu verbessern, wohingegen die weniger brauchbaren Alkane und Aromaten unterdrückt werden sollen. Schließlich sollen Möglichkeiten aufgezeigt werden, wie das Verfahren auf veränderliche Produktnachfrage angepasst werden kann.

Durch aufwendige Forschungsarbeiten wurde nun gefunden, dass insgesamt vier Faktoren maßgeblichen Einfluss auf die nutzbare Standzeit des Katalysatorsystems sowie auf die Produktzusammensetzung ausüben. Dies sind:

- das molare Verhältnis von Silicium zu Aluminium innerhalb des Al-MCM-41 / ZSM-5 Materials;
- der Volumenanteil der Mikroporen innerhalb des Porenvolumens in diesem Material;
- der Nickelgehalt des Katalysators;
- die Zeit/Raumbelastung des Katalysators (WHSV) beim Hydrocracken.

Konkret lässt sich aus diesen Parametern der sogenannte "Desaktivierungspunkt" des Katalysators berechnen. Dies ist eine Zeitangabe, welche die Dauer des Hydrocrackens an dem entsprechenden Katalysator beschreibt, bis dieser eine irreversible Koksschicht ansetzt.

Die erforschte Vorhersagbarkeit des Desaktivierungspunktes gestattet es nun einerseits, den Katalysator hinsichtlich seiner Standzeit zu optimieren und anderseits im laufenden Betrieb die tatsächlich verfügbare Zeit bis zum Erreichen des Desaktivierungspunkt möglichst vollständig auszuschöpfen, ohne sie zu überschreiten. Sodann ist der Katalysator durch Regeneration in einen vormaligen Aktivitätszustand zurückzuversetzen.

Die Lösung der Aufgabe besteht folglich in einer Kombination aus einem Verfahren zum katalytischen Hydrocracken des Oxygenats und aus einem zugehörigen Verfahren zur Regeneration des Katalysators, wobei die Dauer des Hydrocrackens bis zur Regeneration anhand des vorhergesagten Desaktivierungspunktes so bemessen ist, dass die theoretische Standzeit des Katalysators optimal ausgenutzt wird.

Konkreter Gegenstand der Erfindung ist mithin ein kombiniertes Verfahren zum Herstellen eines Produktgemisches durch Cracken von mindestens einem Oxygenat an einem heterogenen Katalysator in Gegenwart von zumindest einem Gas und zur Regeneration des Katalysators, welches die folgenden Merkmale aufweist:

a) das Produktgemisch enthält Alkene, Alkane und Aromaten;

b) bei dem Oxygenat handelt es sich um eine Substanz, die ausschließlich aus Kohlenstoff, Wasserstoff und Sauerstoff besteht;

c) zumindest ein Teil des Oxygenats liegt beim Cracken in der Gasphase vor;

d) der Katalysator enthält ein Material, welches sich aus einer mikroporösen ZSM-5-Phase und aus einer mesoporösen Al-MCM-41-Phase zusammensetzt, wobei das molare Verhältnis von Silicium zu Aluminium innerhalb dieses Materials sich zu dem Wert c bestimmt, wobei c mindestens 25 beträgt und wobei der Volumenanteil der Mikroporen innerhalb des Porenvolumens des Materials sich zu dem prozentualen Wert $p$ bestimmt, dessen Betrag zwischen 24 % und 99 % liegt;

e) der Katalysator enthält des Weiteren Nickel und Molybdän, wobei der Massenanteil an Nickel bezogen auf die Gesamtmasse des Katalysators sich zu dem prozentualen Wert $n$ bestimmt, dessen Betrag zwischen 0 % und 5 % liegt;

f) bei dem Gas handelt es sich wahlweise um Wasserstoff oder um Sauerstoff oder um Stickstoff oder um ein Gasgemisch aus Sauerstoff und Stickstoff oder um ein Gasgemisch aus Stickstoff und Wasserstoff;

g) das Verfahren ist dafür eingerichtet, zumindest drei unterschiedliche Betriebszustände einzunehmen, nämlich einen Crack-Betrieb, einen Spül-Betrieb und einen Regenerations-Betrieb;

h) bei der Durchführung des Verfahrens wird sequenziell zwischen den Betriebszuständen gewechselt, dergestalt, dass auf den Crack-Betrieb der Spül-Betrieb, auf den Spül-Betrieb der Regenerations-Betrieb und auf den Regerations-Betrieb der Crack-Betrieb folgt;

i) Abhängig von dem jeweiligen Betriebszustand wird das Gas folgendermaßen gewählt:

- Im Crack-Betrieb wird als Gas Wasserstoff oder Stickstoff oder ein Gasgemisch aus Wasserstoff und Stickstoff gewählt,
- im Spül-Betrieb wird als Gas Stickstoff gewählt,
- im Regenerations-Betrieb wird als Gas Sauerstoff oder ein Gasgemisch aus Stickstoff und Sauerstoff gewählt;

j) der Spül-Betrieb und der Regenerations-Betrieb erfolgen in Abwesenheit des Oxygenats;

k) der Crack-Betrieb erfolgt bei einer stündlichen Katalysatorbelastung (weight hourly space velocity WHSV), die den Wert $b$ annimmt, dessen Betrag zwischen $4 \text{ h}^{-1}$ und $10 \text{ h}^{-1}$ liegt;

l) der Crack-Betrieb erfolgt über einen Zeitraum $t$, dessen Dauer kürzer ist als der aus Formel [1] berechnende Desaktivierungspunkt T:

$$T= S*N*P*B*(3.0647*\ln(c)+0.9519) \text{ h} \qquad [1]$$

wobei S eine Zahl zwischen 0.8 und 1.2 darstellt,
wobei N aus der Formel [2] wie folgt berechnet wird:

$$N=0.19*n^2+0.2781*n+0.1553 \qquad [2]$$

wobei P aus der Formel [3] wie folgt berechnet wird:

$$P=0.2*p-13 \qquad [3]$$

wobei B aus der Formel [4] wie folgt berechnet wird:

$$B=-0.1111*b^2+0.8889*b+2.222 \qquad [4]$$

Die Berechnungsvorschriften der Formeln [1] bis [4] beruhen auf mathematische Interpolationen der experimentell nachgewiesenen Einflüsse.

Gemäß der Erfindung wird der Desaktivierungspunkt T über die Formel [1] berechnet. Dafür ist die Kenntnis der Variablen S, N, P, B und c erforderlich. Das h in Formel [1] steht für die Zeiteinheit Stunde.

Die Variable c steht für das das molare Verhältnis von Silicium zu Aluminium innerhalb des Al-MCM-41 / ZSM-5 Materials. c muss größer sein als 25.

Der Nickelgehalt des Katalysators in Gew.-% ist der Wert n. Er liegt zwischen 0 und 5 Gew.-%. Aus n berechnet sich gemäß Formel [2] der Einflussfaktor N.

Der erfindungsgemäß eingesetzte Katalysator basiert auf einem besonderen Alumosilicat, welches sich aus einer ZSM-5 Phase und aus einer Al-MCM-41 Phase zusammen setzt. Die ZSM-5 Phase weist dabei Mikroporen auf (Porengröße unter 2 nm), währenddessen die Al-MCM-41 Phase Mesoporen (Porengröße 2 nm bis 50 nm) aufweist.

Der Volumenanteil der Mikroporen innerhalb des Porenvolumens in dem Al-MCM-41 / ZSM-5 Materials ist der Wert p. Der liegt zwischen 24 % und 99 %. Es gibt verschiedene Methoden, den Volumenanteil der Mikroporen zu messen. Die Messmethoden liefern unterschiedlich genaue Werte. Der Wertebereich von 24 % bis 99 % bezieht sich auf die t-Plot Methode und berücksichtigt die dabei zu erwartenden Messfehler. Aus dem gemäß t-Plot bestimmten Volumenanteil der Mikroporen wird nach Formel [3] der Einflussfaktor P bestimmt.

Der Einfluss der Katalysatorbelastung (WHSV) auf die Desaktivierung geht über den Faktor B in die Berechnung ein. Einflussfaktor B wird aus Formel [4] berechnet. Darin steht B für die stündlichen Katalysatorbelastung (weight hourly space velocity WHSV) im Crack-Betrieb. Der Betrag von b kann zwischen $4 \text{ h}^{-1}$ und $10 \text{ h}^{-1}$ liegen. In Formel [4] wird b ohne Einheit eingegeben, sodass der Faktor B dimensionslos ist.

Schließlich wird noch der Sicherheitsfaktor S festgelegt, der zwischen 0.8 und 1.2 liegen kann. Dies bedeutet, dass der gemäß Formel [1] berechnete Desaktivierungspunkt T von dem tatsächlichen Wert um +/- 20 % abweichen kann. Der Sicherheitsfaktor S gleicht Interpolationsfehler aus.

Auf diese Weise liegen nun alle für Formel [1] benötigten Werte vor, sodass sich der Desaktivierungspunkt T in Stunden ausrechnen lässt.

Nun ist die maximal mögliche Betriebsdauer im Crack-Betrieb bekannt. Der Crack-Betrieb wird somit über eine Dauer t betrieben, die kürzer ist als die Zeit bis zum Erreichen des Desaktivierungspunktes T. Vor Erreichen des Desaktivierungspunktes T wird damit der Crack-Betrieb beendet und auf Spül-Betrieb umgeschaltet.

Im Spül-Betrieb wird der Katalysator zunächst von Oxygenat gereinigt. Dafür wird die Zufuhr von Oxygenat unterbrochen und als Gas inerter Stickstoff verwendet. Der mit Stickstoff gespülte Katalysator kann dann regeneriert werden. Hierfür wird als Gas nun Sauerstoff oder ein Gemisch aus Stickstoff und Sauerstoff verwendet. Der auf dem Katalysator abgesetzte Koks verbindet sich mit dem Sauerstoff zu $CO_2$ und wird ausgetragen. Sofern der Katalysator dafür nicht mehr heiß genug ist, muss von außen geheizt werden oder der Sauerstoff vorgewärmt werden.

Wenn die Koksschicht abgebaut ist, wird der Regenerations-Betrieb beendet und wieder mit dem Crack-Betrieb begonnen. Dafür wird das Gas wieder auf Wasserstoff umgestellt und Oxygenat zugeführt.

Die zyklischen Betriebswechsel werden bei der Erfindung durch Zu- und Abschalten des Oxygenats und durch Veränderung des Gases bewerkstelligt. Der Katalysator muss somit zur Regeneration nicht aus dem Reaktor ausgebaut werden. Die Regeneration erfolgt *in-situ,* also im Reaktor. Ein separater Regenerator ist damit auch verzichtbar.

Optimale Bedingungen für die Produktion von Olefinen werden dann erreicht, wenn der Wert c größer ist als 50, wenn der Wert *n* zwischen 0 und 1 % liegt und wenn der Crack-Betrieb bei einer Temperatur zwischen 450°C und 550°C und einem Druck zwischen $3*10^5$ Pa und $7*10^5$ Pa erfolgt. Aromaten und Paraffine werden bei diesen Bedingungen unterdrückt. Sofern eine hohe Nachfrage an Aromaten bestehen sollte, werden die genannten Betriebsbereiche gemieden, um mehr Aromaten zu bilden. Auf diese Weise kann das Produktspektrum der gegenwärtigen Nachfrage angepasst werden.

Das Verfahren lässt sich grundsätzlich auf alle Oxygenate anwenden. Es funktioniert besonders gut mit Ethern, Estern oder mit ungesättigten Fettsäuren. Viele Substanzen aus diesen Stoffklassen lassen sich aus Nachwachsenden Rohstoffen erzeugen. So sind die ungesättigten Fettsäuren in vielen Pflanzenöle enthalten. Es können selbstverständlich auch Gemische von mehreren Substanzen aus den Stoffklassen der Ether, der Ester oder der ungesättigten Fettsäuren als Oxygenat verwendet werden.

Um den Desaktivierungspunkt T nicht zu überschreiten, wird die Dauer des Crack-Betriebs t stets kürzer gewählt als die Dauer des Desaktivierungspunkt. Es werden zwei unterschiedliche Regenerationsstrategien vorgeschlagen, die sich in der Länge t des Crack-Betriebs unterscheiden.

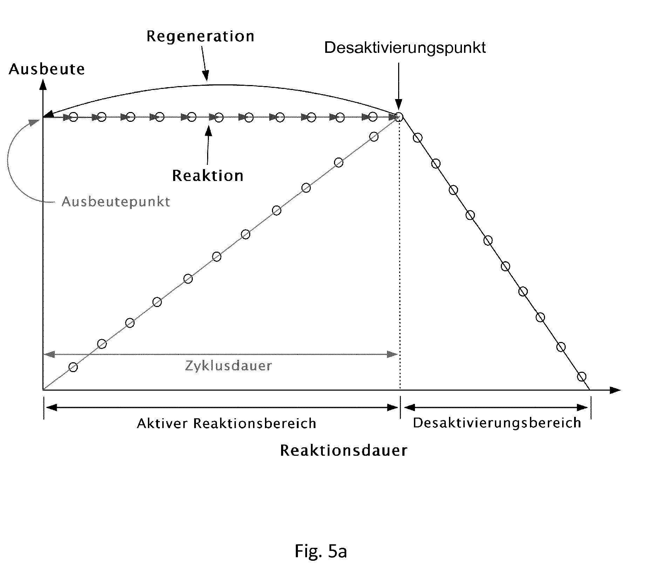

In einer ersten Variante beträgt der Zeitraum t, über den der Crack-Betrieb erfolgt, 75 % bis 95 % des Desaktivierungspunkts. Dies bedeutet, dass der Koks vollständig in der Regeneration wieder entfernt wird, sodass die Anfangsaktivität des Katalysators wiederhergestellt wird (siehe Figur 5a).

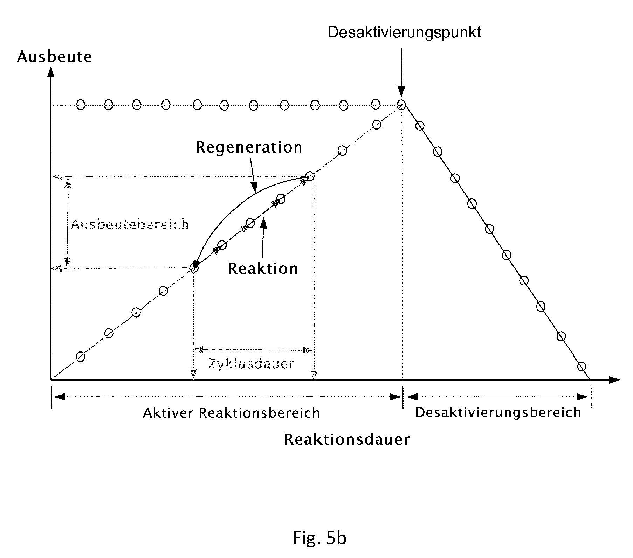

Alternativ beträgt der Zeitraum t, über den der Crack-Betrieb erfolgt, lediglich 15 % bis 25 % des Desaktivierungspunkts. Aufgrund der kurzen Betriebsdauer hat der Katalysator noch nicht viel Koks angesetzt, sodass es genügt, ihn entsprechend unvollständig abzutragen. Der Katalysator bekommt somit nicht seine volle Anfangsaktivität zurück sondern einen Aktivitätszustand der zwischen der Anfangsaktivität und der Aktivität liegt, bei der die Regeneration begonnen wurde. Dafür ist der Zeitbedarf für die Regeneration wiederum geringer (siehe Figur 5b).

Abhängig von der gewählten Regenerationsstrategie lässt sich auch das Produktspektrum steuern. So führt beispielsweise eine hochfrequente Regeneration zu einer konstant hohen Ausbeute an Alkenen.

Wie bereits erwähnt, ist die t-Plot Methode, nach welcher der Volumenanteil p der Mikroporen innerhalb des Porenvolumens des Al-MCM-41 / ZSM-5 Materials bestimmt wird, fehlerbehaftet.

Galarneau et. al beschreiben eine rechnerische Korrektur der via t-Plot gemessenen Werte:

Anne Galarneau, François Villemot, Jeremy Rodriguez, François Fajula, Benoit Coasne: Validity of the t-plot Method to Assess Microporosity in Hierarchical Micro/Mesoporous Materials. Langmuir 2014, 30, 13266-13274

Nach dieser Methode korrigiert lässt sich der zulässige Wertebereich für p eingrenzen auf das Intervall von 30 % bis 90 %. Gemäß einer bevorzugten Ausführungsform der Erfindung liegt demnach der Betrag des prozentualen Werts p zwischen 30 % und 90 %; gemessen nach der t-Plot-Methode und korrigiert nach der Methode von Galarneau et al. wie in der vorzitierten Veröffentlichung beschrieben.

Der Katalysator kann neben Nickel und Molybdän auch Platin enthalten. Der Katalysator wird vorzugsweise mit Platin dotiert. Der Pt-Gehalt bezogen auf die Gesamtmasse des Katalysators beträgt dann lediglich zwischen 0.1 Gew.-% bis 0.3 Gew.-%.

Die wissenschaftlichen Grundlagen der Erfindung und die experimentell gefundenen Zusammenhänge sollen nun eingehend beschrieben werden. Hierfür zeigen:

Figur 1:     Aufbau und Funktion des Katalysators;

Figur 2:     Blockschema des eingesetzten Spaltprozesses;

Figur 3:     Ablauf der oxidativen Regeneration am Beispiel eines Zwei-Reaktor-Systems;

Figur 4:     Variation des Produktspektrums durch die Wahl der Syntheseparameter, exemplarisch;

Figur 5a:    erste Regenerationsstrategie zur Steuerung des Produktspektrums während der Reaktion: Vollständige Entfernung des Koks, Wiederherstellung der Anfangsaktivität;

Figur 5b:    zweite Regenerationsstrategie zur Steuerung des Produktspektrums während der Reaktion: Unvollständige Entfernung des Koks, Wiederherstellung einer beliebigen Aktivität;

Figur 6a:    Darstellung der Spaltaktivität des Katalysators im Vergleich zum thermischen Vergleich zum thermischen Spalten während der Umsetzung von Oxygenaten: Gasausbeute während der Umsetzung von Rapsöl mit stündlicher Regeneration;

Figur 6b:    Darstellung der Spaltaktivität des Katalysators im Vergleich zum thermischen Vergleich zum thermischen Spalten während der Umsetzung von Oxygenaten: Ausbeute in Abhängigkeit der C-Fraktion während der Umsetzung von Ethyllaurat;

Figur 7:     Spaltaktivität in Abhängigkeit des eingesetzten Feeds, Angabe der Gasausbeute;

Figur 8a:    Umsatz der Spaltung von Ethyllaurat in Abhängigkeit der Temperatur und des Druckes;

Figur 8b:    Ausbeute an kurzkettigen Olefinen während der Spaltung von Ethyllaurat in Abhängigkeit der Temperatur und des Druckes;

Figur 9a:    Einfluss des Aluminiumgehalts auf die Ausbeute von Olefinen im aktiven Reaktionsbereich des Katalysators, Reaktionsverlauf normiert auf den Desaktivierungspunkt;

Figur 9b:    Einfluss des Aluminiumgehalts auf die Ausbeute von Aromaten und Paraffinen im aktiven Reaktionsbereich des Katalysators, Reaktionsverlauf normiert auf den Desaktivierungspunkt;

Figur 10:    Einfluss des Nickelgehaltes des Katalysator auf die Ausbeute von Olefinen, Paraffinen, Aromaten und Methan, es ist jeweils das Maximum der jeweiligen Ausbeute angegeben, welches mit diesem Nickel-Gehalt erreichbar ist;

Figur 11:    Angabe des Desaktivierungspunktes in Abhängigkeit des Si/Al-Verhältnisses des Katalysators;

Figur 12a:   Einfluss des Nickelgehaltes des Katalysators auf die Langzeitstabilität;

Figur 12b:   Einfluss des Porenverhältnisses des Katalysators auf die Langzeitstabilität;

Figur 12c:   Einfluss der Belastung des Katalysators auf die Langzeitstabilität;

Figur 13:    Anwendung einer Regeneration mit vollständiger Koksentfernung, unterteilt in jeweilige Regenerationszyklen, im Paar jeweils links: vor und rechts: nach erfolgter oxidativer Regeneration;

Figur 14:    Anwendung einer Regeneration mit vollständiger Koksentfernung, unterteilt in jeweilige Regenerationszyklen, im Paar jeweils links: vor und rechts: nach erfolgter oxidativer Regeneration.

Die Erfindung liefert eine neuartige Methode zur gesteuerten Erzeugung wertvoller industrieller Grundchemikalien bei der heterogen katalysierten Umsetzung von biogenen und industriellen Reststoffen auf Basis von Oxygenaten. Hierfür wurde ein maßgeschneiderter, langzeitstabiler Katalysator in Kombination mit einem oxidativen Regenerationsprogramm entwickelt. Der Syntheseweg dieses Katalysators erlaubt die Variation des während der Spaltreaktion gefundenen Produktspektrums. Das dabei entwickelte oxidative Regenerationsprogramm des Katalysators stellt durch die Wahl der Regenerationsparameter die Möglichkeit bereit, dieses Produktspektrum in einem weiten Bereich während der Reaktion flexibel einzustellen. Durch die entwickelte Prozessführung kann auf die Anwendung eines separaten Regenerators verzichtet werden.

Katalysators

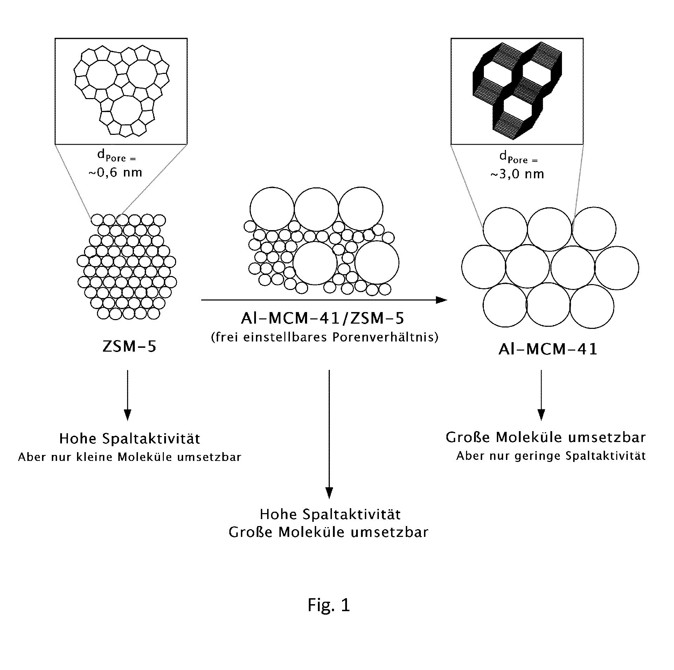

Die Figur 1 zeigt den Aufbau und die Funktion des gefundenen Katalysators. Er setzt sich aus einer mikroporösen ZSM-5-Phase und einer mesoporösen Al-MCM-41-Phase zusammen. ZSM-5 ist ein Alumosilicat mit einem 3D-Porensystem, bestehend aus nahezu kreisförmigen parallel zueinander verlaufenden Zylinderporen (5.4 x 5.6 Å), die senkrecht dazu sinusartig von ebenso nahezu kreisförmigen Porenkanälen (5.1 x 5.5 Å) durchzogen sind. Al-MCM-41 ist ein Alumosilicat mit einem 2D-Porensystem bestehend aus einer hexagonalen Anordnung parallel zueinander verlaufender Zylinderporen (20 bis 40 A). Die Porenwände des Al-MCM-41 sind amorph. Das als Katalysator verwendete Material kann als chemische (d.h. die Phasen sind über chemische Bindungen miteinander verwachsen) Mischung aus ZSM-5 und Al-MCM- 41 verstanden werden. Die Anwendung dieses Materials als Katalysator oder zumindest als Trägermaterial ergibt sich aus der Kombination der Vorteile von Al-MCM-41 und ZSM-5, welche in Tabelle 1 dargestellt sind.

Tabelle 1: Vorteile der reinen Phasen ZSM-5 und Al-MCM-41

| ZSM-5 | Al-MCM-41 |
|---|---|
| hohe hydrothermale Stabilität | Große Moleküle können umgesetzt werden |
| hohe Spaltaktivität | kann Oxygenate vorspalten |
| geringe Verkokungsneigung | hoher Porennutzungsgrad |
| gute Regenerierbarkeit | hohe Diffusibilität |
| Größen- und Formselektivität | hohe Resistenz gegen Porenverschluss |
| leichte Synthese mit weitem Si/Al-Bereich | leichte Synthese mit weitem Si/Al-Bereich |

Es ist ersichtlich, dass die Kombination von ZSM-5 und Al-MCM-41 zu einem stabilen, aktiven, verkokungsresistenten Katalysator führt. Dabei hat die Al-MCM-41-Phase die Aufgabe, große Oxygenate (wie Triacylglyceride) vorzuspalten, welche im Anschluss in der ZSM-5- Phase über eine selektive sekundäre Spaltung in wertvolle industrielle Grundchemikalien wie kurzkettige Olefine oder Aromaten umgesetzt werden. Figur 1 deutet an, dass die Verteilung der ZSM-5- und der Al-MCM-41-Phase im Material statistisch erfolgt. Dies hat zur Folge, dass das Mesoporensystem des Al-MCM-41 Porenkanäle durch den ZSM-5 hindurch zur Verfügung stellt. Dies erhöht die Diffusibilität und den Porennutzungsgrad von ZSM-5 im Material im Vergleich zur reinen Phase erheblich. Darüber hinaus kommt es zu einer Erhöhung der Langzeitstabilität des Katalysators, welche durch eine geringere Verkokungsneigung und durch einen erleichterten Abtransport der Produkte verursacht wird. Diese statistische Verteilung ergibt sich durch die Syntheseroute der "Eintopfsynthese", bei der ZSM-5 und Al-MCM-41 simultan im gleichen Reaktionsraum dargestellt werden.

Das Mischungsverhältnis von ZSM-5 zu Al-MCM-41 im Al-MCM-41/ZSM-5 - Material wird durch die Reaktionsdauer der Synthese eingestellt. Die Synthese bezogen auf die Darstellung von 1 kg Katalysator verläuft über die im Folgenden beschriebenen Schritte:

- Vorlage von 0.79 kg Cetyltrimethylammoniumbromid und Zugabe von 16.7 Liter entionisiertem Wasser
- Zugabe von 1.83 kg Tetrapropylammoniumbromid und Homogenisierung für 15 Minuten
- Portionsweise Zugabe von gemörserten und vermengten Si- und Al-Präkursoren, Natriumtrisilicat = 1.88 kg, Natriumaluminat = 0.00 bis 0.15 kg
- Einstellen des pH-Wertes auf 10.0 mit 50 Gew.-% iger $H_2SO_4$
- Hydrothermale Autoklav-Behandlung für 5 h bis 100 h bei 150 °C
- Abkühlen und Quenchen des Synthesegels bei 50 °C mit Wasser und Ethanol
- Extraktive Templatentfernung mit Ethanol
- Oxidative Templatentfernung durch eine Calcination unter Luft bei 550 °C für 24h
- $NH_4^+/Na^+$-Kationenaustausch durch Kochen des Rohmaterials in 0.1 M $NH_4NO_3$-Lösung unter Rückfluss bei 80°C für 3h, mindestens dreimal
- Kalzination unter Luft bei 450 °C für 6h zur Überführung der $NH_4$-Form des Trägermaterials in die katalytisch aktive H-Form
- Wahlweise Co-Imprägnierung mit Nickelnitrat $Ni(NO_3)_2 \cdot 6H_2O$ und Ammoniumheptamolybdat $(NH_4)_6Mo_7O_{24} \cdot 4H_2O$ sowie Dotierung mit $Pt(NO_3)_2$ durch Flüssigimprägnierung und anschließende Calcination unter Luft bei 450 °C für 6h

Prozessschema

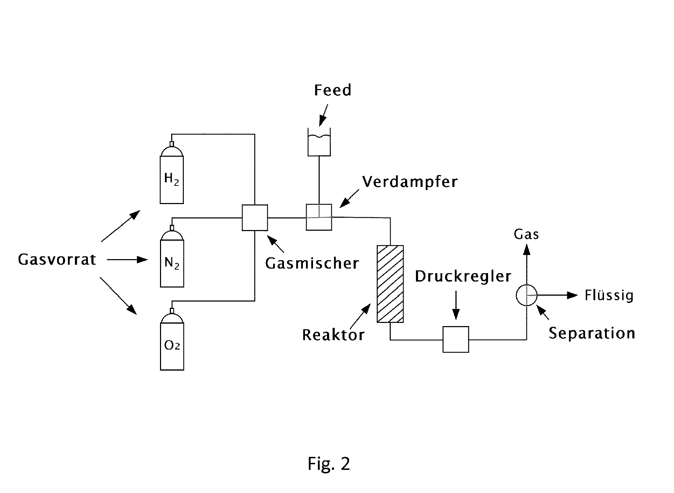

In Figur 2 ist der eingesetzte Spaltprozess schematisch dargestellt. Die Einfachheit der Prozessführung zeigt die Möglichkeit die Erfindung, auf die derzeitige technische Infrastruktur anzuwenden. Das Kernstück der Prozessführung ist der Reaktor. Hierbei kann ein Rohreaktor, ein Rohrbündelreaktor oder ein Wirbelschichtreaktor zum Einsatz kommen. Die Reaktion verläuft vorzugsweise bei einer Temperatur von 500 °C, wobei das Feed zuvor in einem Verdampfer bei etwa 350 °C verdampft und mit dem Reaktionsgas vermischt wird. Im Reaktor wird das Gasgemisch mit dem Katalysator unter einem Druck von vorzugsweise 5 bar (=$5*10^5$ Pa) in Kontakt gebracht. Als Reaktionsgas kann Wasserstoff oder Stickstoff dienen. Für die oxidative Regeneration wird Stickstoff und Sauerstoff als frei einstellbares Gasgemisch verwendet.

Oxidative Regeneration

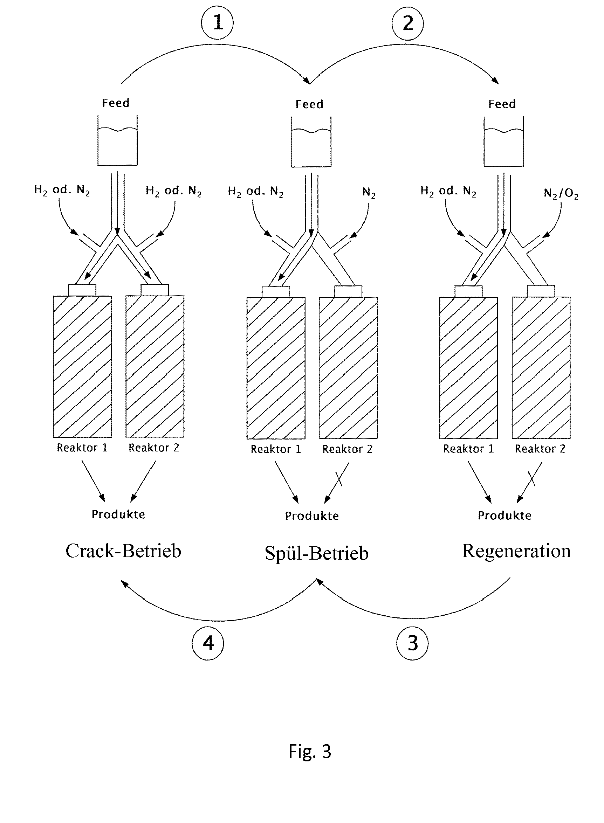

Figur 3 zeigt am Beispiel eines Zwei-Reaktor-Systems die Abfolge der oxidativen Regeneration. Die dargestellte Abfolge ist jedoch auch auf Ein- bzw. Mehrreaktorsysteme übertragbar. Bei einem säurekatalysierten Spaltvorgang kommt es im Verlauf der Reaktion zur Ausbildung von Koks, welcher durch Blockade von Poreneingängen oder durch Besetzen aktiver Zentren zur Desaktivierung des Katalysators führt. Die Aufgabe der oxidativen Regeneration ist es, diesen Koks mittels Sauerstoff abzubrennen. Um jedoch die Explosionsgemische aus Wasserstoff und Sauerstoff bzw. den Produkt-Kohlenwasserstoffen und Sauerstoff zu vermeiden, ist vor und nach dem Brennvorgang ein Spülvorgang mit Stickstoff notwendig. Während der Spül- und Brennphase wird der Reaktor mit dem zu regenerierenden Katalysator vom Feedzustrom abgekoppelt.

Beachtlich an Figur 3 ist, dass zwei parallel geschaltete Reaktoren genutzt werden, die sich in unterschiedlichen Betriebszuständen befinden können: So befinden sich in Figur 3 links beide Reaktoren im Crack-Betrieb, während dessen in der Mitte lediglich Reaktor 2 gespült wird, währenddessen Reaktor 1 sich weiterhin im Crack-Betrieb befindet. Dementsprechend wird in Figur 3 rechts lediglich Reaktor 2 regeneriert. In einer nicht dargestellten späteren Betriebssituation würde nun der Katalysator in Reaktor 1 gespült und regeneriert, währenddessen Reaktor 2 im Crack-Betrieb verbleibt. Auf diese Weise wird jederzeit Oxygenat gecrackt.

Da der verwendete Katalysator eine sehr gute und dauerhaft stabile Regenerierbarkeit verfügt, ergibt sich für den Katalysator eine sehr lange Standzeit, bevor er ausgetauscht werden muss. Der Katalysator sorgt während der Reaktion für ein bestimmtes Produktspektrum in Abhängigkeit der Reaktionsdauer. Dieses Produktspektrum kann durch die Wahl der Syntheseparameter beeinflusst werden.

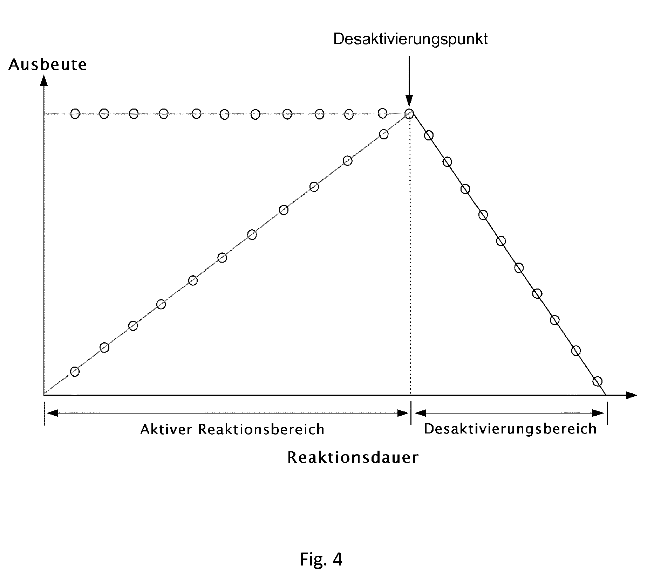

In Figur 4 ist exemplarisch die Variation des Produktspektrums anhand der Ausbeute eines Zielproduktes in Abhängigkeit der Syntheseparameter dargestellt. Die horizontale Linie stellt den Verlauf einer konstanten Produktausbeute und die durch den Ursprung des Koordinatensystems diagonal verlaufende Linie den Verlauf einer stetig steigenden Produktausbeute in Abhängigkeit der Reaktionsdauer dar.

Die Reaktionsdauer unterteilt sich am Desaktivierungspunkt in einen "aktiven Reaktionsbereich" und einen "Desaktivierungsbereich". Befindet sich der Katalysator im Desaktivierungsbereich, kann der gebildete Koks durch eine oxidative Regeneration nicht mehr vollständig abgebrannt werden, es handelt sich hierbei um irreversiblen Koks. Innerhalb des aktiven Reaktionsbereichs führt eine oxidative Regeneration stets zu einer vollständigen Entfernung des Kokses, es handelt sich hierbei um reversiblen Koks. Demnach sollte eine Regeneration immer vor dem Desaktivierungspunkt erfolgen. Durch die Optimierung der folgenden Regenerationsparameter ist es möglich, jeden beliebigen Punkt im aktiven Reaktionsbereich wiederherzustellen:

- Sauerstoff-Konzentration im $O_2/N_2$-Gemisch (0 bis 30 Vol.-%)
- Dauer der Regeneration (0 bis 30 Minuten)
- Temperatur und Druck (400 °C bis 650 °C, 0 bis $10*10^5$ Pa)

In den Figuren 5a und 5b sind zwei mögliche Regenerationsstrategien dargestellt, die sich aus der Anwendung der oxidativen Regeneration ergeben. In Figur 5a wird der Koks durch die Wahl der Regenerationsparameter vollständig entfernt und somit die Anfangsaktivität des Katalysators vollständig wiederhergestellt, wohingegen in Figur 5b eine unvollständige Koksentfernung angestrebt wird. Durch diese Regenerationsstrategien ist es möglich, während des Prozesses flexibel das gewünschte Produktspektrum einzustellen. Die gewählte Regenerationsstrategie entscheidet somit über die Zyklusdauer und damit über die Frequenz der Regeneration. Jedoch muss bei einer unvollständigen Koksentfernung beachtet werden, dass sich der Ort und vor allem die Natur des unverbrannten Kokses verändern kann. Dies führt während der unvollständigen Regeneration möglicherweise zu einer Umwandlung von reversiblen Koks in irreversiblen Koks, wodurch sich die Standzeit des Katalysators verringert. Aus diesem Grund sollte nach einer gewissen Anzahl an unvollständigen Regenerationszyklen eine vollständige Koksentfernung vorgenommen werden. Dies kann durch eine verfahrenstechnische Optimierung realisiert werden.

Der Desaktivierungspunkt wird durch die Syntheseparameter des Katalysators und die Prozessparameter bestimmt. Der Desaktivierungspunkt verschiebt sich zu einer höheren Reaktionsdauer, mit

- sinkender Katalysatorbelastung,
- steigendem Si/Al-Verhältnis des Katalysators,
- steigendem Mikroporenanteil im Al-MCM-41 / ZSM-5 - Material,
- steigendem Nickel-Gehalt des Katalysators.

Spaltaktivität des Katalysators und Einfluss des Feeds

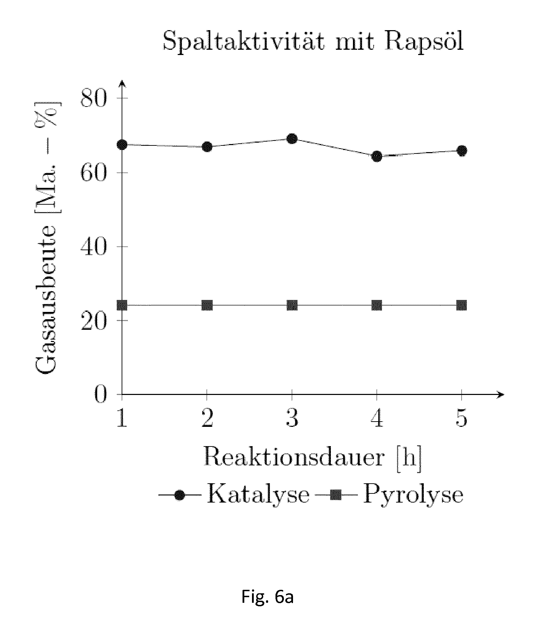

Anhand Figur 6a (PtNiMo/(Al-MCM-41/ZSM-5), 6.9 Gew.-% Mo, 1.3 Gew.-% Ni, 0.2 Gew.-% Pt, c = 25, p = 88%, 500 °C, $5*10^5$ Pa, b = $5h^{-1}$, Betriebsdauer = 3h, stündliche Regeneration) kann gezeigt werden, dass der eingesetzte Katalysator in der Lage ist, komplexe Oxygenate wie Rapsöl zu spalten. Eine Regeneration nach jeder Stunde Betriebsdauer führt zu einer Aufrechterhaltung der Spaltaktivität. Als Maß der Spaltaktivität wird die Gasausbeute herangezogen.

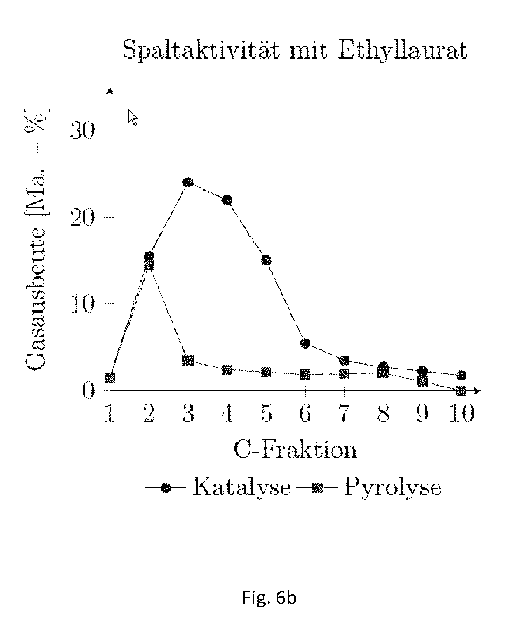

Der Grund dafür wird in Figur 6b (Al-MCM-41/ZSM-5, c= 25, p= 86%, 500 °C, 5 bar, b = $10h^{-1}$, Betriebsdauer = 0.5h) deutlich. Hier ist die Ausbeute der C-Fraktionen von $C_1$ bis $C_{10}$ im Vergleich zwischen dem katalytischen und dem thermischen Spalten dargestellt. Wie zu erkennen ist, unterscheiden sich die beiden Verläufe hauptsächlich in der $C_3$-, $C_4$- und $C_5$-Fraktion, welche unter Aufarbeitungsbedingungen gasförmig sind.

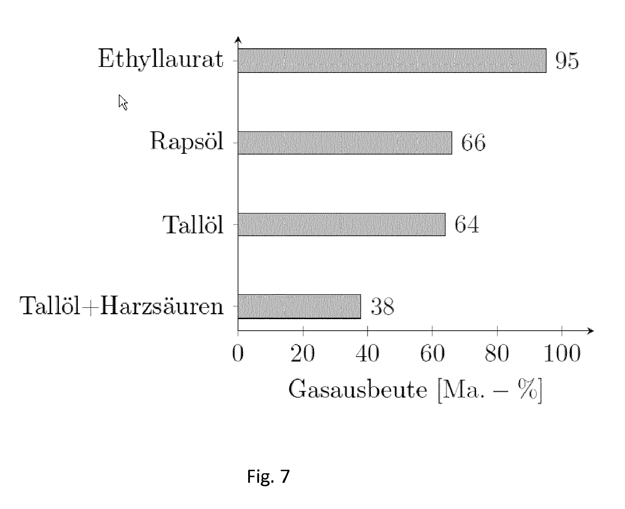

Anhand Figur 7 (NiMo/(Al-MCM-41/ZSM-5), 6.9 Gew.-% Mo, 1.3 Gew.-% Ni), c=25, p=70% bis 90%, 500 °C, b=5 $h^{-1}$, Betriebsdauer=0.5h, stündliche Regeneration) soll verdeutlicht werden, dass in Abhängigkeit der Oxygenatspezies Unterschiede in der Spaltaktivität auftreten können. Ein Ethylester wird effizienter gespalten als eine analoge Carbonsäure. Triacylglyceride und Carbonsäuren weisen in etwa gleiche Spaltaktivitäten auf. Jedoch ist auch die korrespondierende Kohlenstoffkettenlänge der eingesetzten Oxygenaten für die Gasausbeute von Bedeutung. Die Zugabe von Harzsäuren (Polyaromatische Kohlenwasserstoffe) führt zu einer Absenkung der Gasausbeute, was anzeigt, dass der Katalysator solche Spezies nicht umsetzen kann. Der hier eingesetzte Katalysator ist auf die Umsetzung von Oxygenaten spezialisiert.

Wahl der Prozessparameter

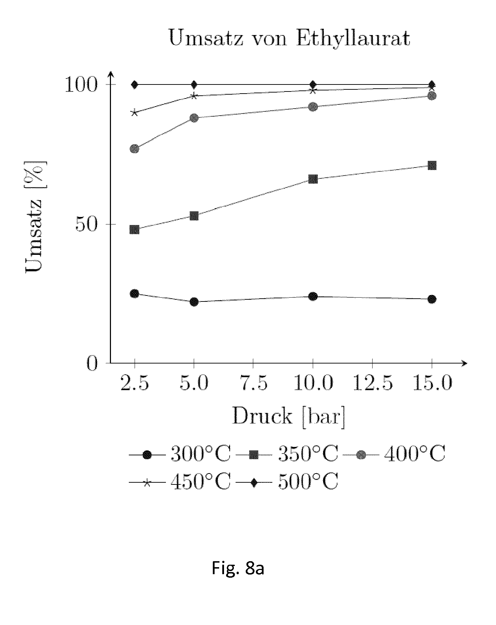

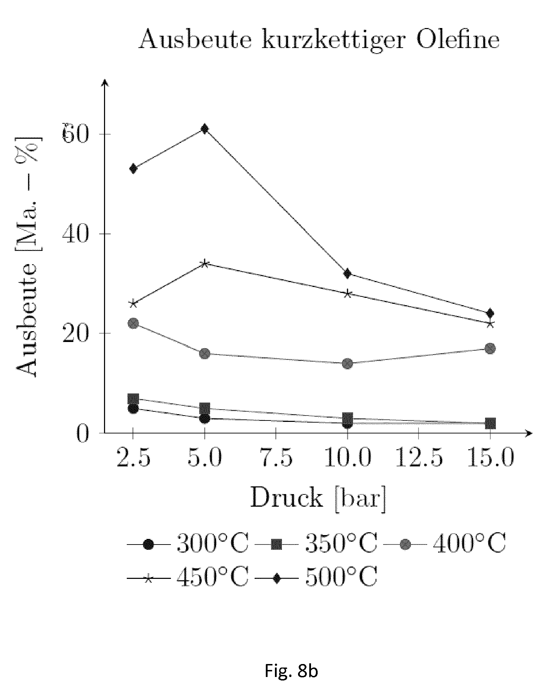

Die Wahl der vorzugsweisen Prozessparameter (500 °C und 5 bar) ergibt sich aus den Figuren 8a und 8b. In Figur 8a (NiMo/(Al-MCM-41/ZSM-5), 6.9 Gew. -% Mo, 2.3 Gew. -% Ni), c = 25, b = $6h^{-1}$, Betriebsdauer = 0.5h) ist der Umsatz in Abhängigkeit der Temperatur und des Druckes für die Spaltung von Ethyllaurat über einen Nickel-beladenen Katalysator gezeigt. Man erkennt, dass bei einer Temperatur von 500 °C unabhängig vom Druck der Umsatz vollständig ist. Bei geringeren Temperaturen erkennt man eine Umsatzsteigerung mit steigendem Druck. Bei einer Temperatur von 300 °C ist die kinetische Hemmschwelle des Prozesses noch nicht überschritten. Hieraus kann ein Temperatur- und Druckbereich für den Prozess definiert werden. Es ist ersichtlich, dass eine Temperaturverringerung mit einer notwendigen Druckerhöhung einhergehen muss, um den Umsatz hoch zu halten. Damit nähert man sich schrittweise den Reaktionsbedingungen des industriellen Hydrospaltens an (300 °C bis 400 °C und $100*10^5$ Pa bis $200*10^5$ Pa). Jedoch verliert diese Reaktionsführung die Flexibilität im Produktspektrum, was anhand von Figur 8b (NiMo/(Al-MCM-41/ZSM-5), 6.9 Gew.-% Mo, 2.3 Gew.-% Ni, c= 25, b = 6h-1, Betriebsdauer= 0.5h) gezeigt werden soll. Es ist zu erkennen, dass mit steigendem Druck die Ausbeute an kurzkettigen Olefinen tendenziell abnimmt, was mit einer verbesserten Hydrierfähigkeit begründet wird. Der hier vorgestellte Prozess soll jedoch in der Lage sein, flexibel über die Wahl der Syntheseparameter und der Aktivitätseinstellung durch die Regeneration unterschiedliche Produktfraktionen, wie z.B. auch kurzkettige Olefine, darzustellen. Das Maximum der Olefinausbeute ist bei den oben genannten Reaktionsbedingungen zu finden.

Variation des Produktspektrums durch die Wahl der Syntheseparameter

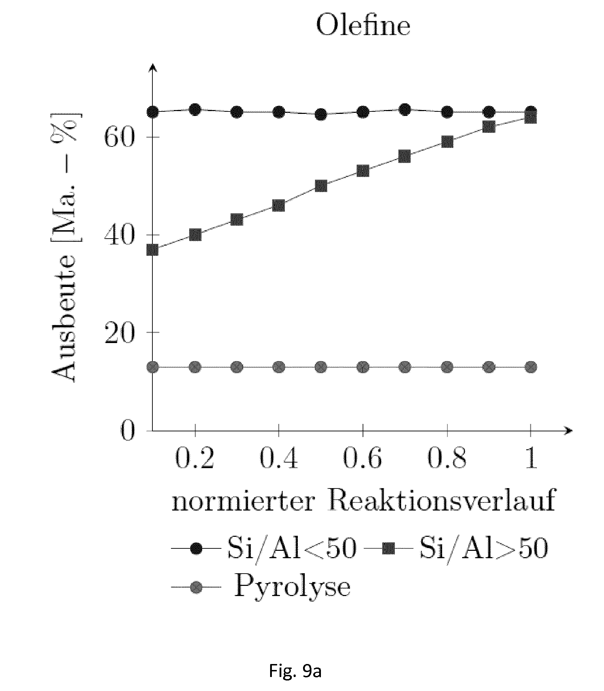

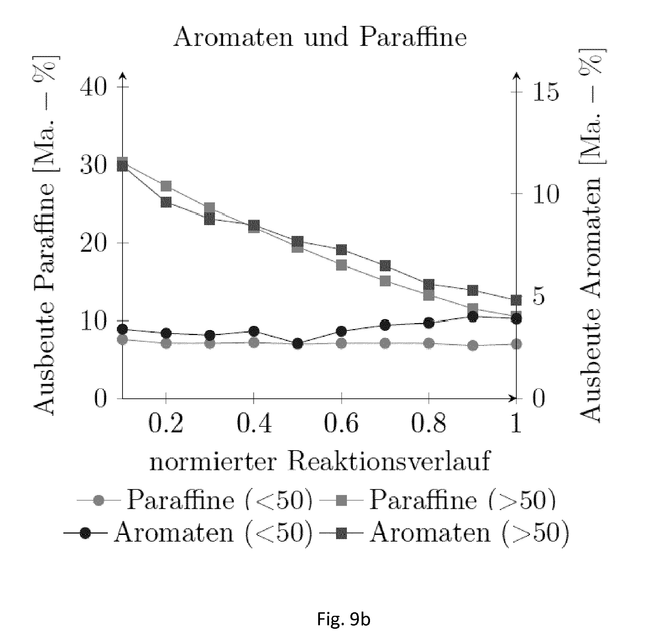

Die Erfindung sieht es vor, durch die Syntheseparameter des Katalysators ein Produktspektrum einzustellen, welches durch die Regenerationsstrategien während der Reaktion gezielt eingestellt werden kann. Der Einfluss des Aluminiumgehaltes des Katalysators auf das Produktspektrum ist in den Figuren 9a und 9b (Al-MCM-41/ZSM-5, c= 25 und 60, p= 80% bis 90%, 500 °C, $5*10^5$ Pa, b = $10h^{-1}$, Betriebsdauer = 1.5h) dargestellt. Es ist die Ausbeuteentwicklung von Olefinen, Paraffinen und Aromaten in Abhängigkeit der Reaktionsdauer abgebildet. Die Rektionsdauer ist für Vergleichszwecke auf den Desaktivierungspunkt normiert, da neben der Variation des Produktspektrums auch zugleich die Langzeitstabilität und damit verbunden der Desaktivierungspunkt verändert wird. Die dargestellten Verläufe kann man als Grenzfälle betrachten, wobei alle Produktverläufe zwischen diesen beiden Grenzverläufen durch geeignete Syntheseparameter eingestellt werden können. Die Darstellung von Paraffinen und Aromaten ist in diesem Prozess miteinander gekoppelt.

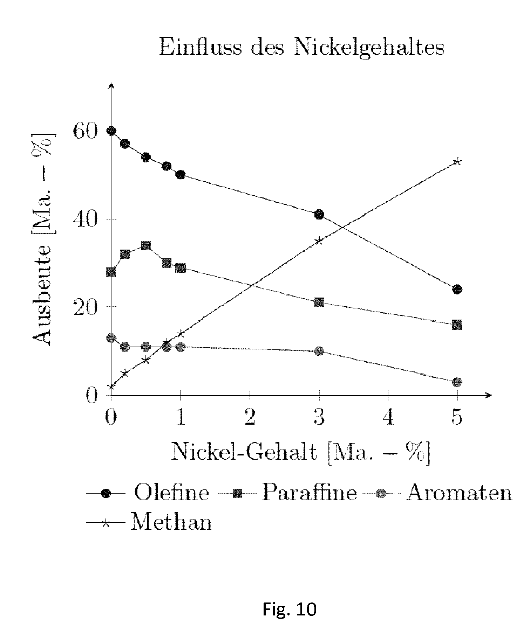

Dieses Produktspektrum kann durch die Beladung mit Nickel zu gewissen Anteilen leicht beeinflusst werden. Figur 10 (NiMo/(Al-MCM-41/ZSM-5), 3.0 Gew.-% Mo, 0.0 bis 5.0 Gew.-% Ni), c= 25, p = 32%, 500 °C, $5*10^5$ Pa, b = $10h^{-1}$, Betriebsdauer = 1.5h) stellt die maximale Ausbeute einer bestimmten Produktfraktion dar, welche während der Reaktionszeit erreichbar ist. Es wird deutlich, dass durch die Zugabe von Nickel die Ausbeute an Olefinen sinkt und die Ausbeute an Paraffinen anfänglich steigt, was durch eine zunehmende Hydrierfunktionalität erklärbar ist. Die Ausbeute von Aromaten ist davon kaum beeinflusst.

Diese Entwicklung wird durch eine zunehmende Hydrogenolyseaktivität überlagert, welche sich in der verstärkten Methanbildung manifestiert. Ab einer Massenbeladung ab 0.5 Gew.-% Nickel auf dem Katalysator wirkt die Hydrogenolyse maßgeblich.

Variation der Langzeitstabilität und des Desaktivierungspunktes

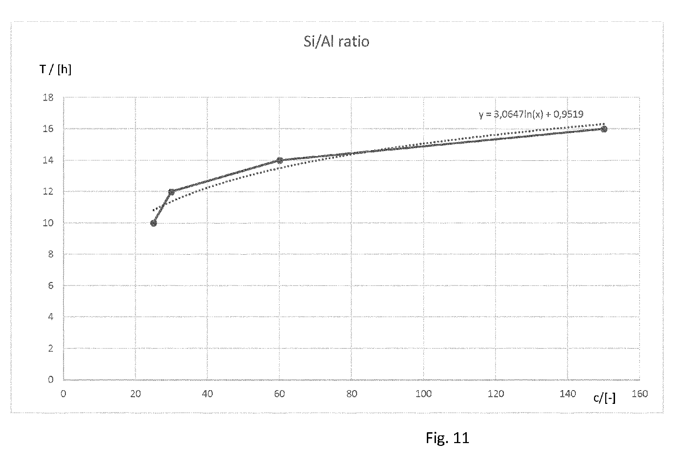

In Figur 11 (Al-MCM-41/ZSM-5, c= 25 bis 150, p= 80% bis 90%, 500 °C, $5*10^5$ Pa, b = $10h^{-1}$) ist die Reaktionsdauer bis zum Desaktivierungspunkt angegeben. Man erkennt, dass durch eine Reduktion des Aluminiumgehaltes die Langzeitstabilität des Katalysators verlängert wird (Der Verlauf weist bei c > 150 ein Maximum auf).

Die in Figur 11 dargestellten Messwerte Desaktivierungspunkt T in Stunden über Al:Si-Verhältnis c lassen sich logarithmisch interpolieren zu der Formel [0]:

$$T/h = 3.0647*\ln(c) + 0.9519 \qquad [0]$$

Darin steht T für den Desaktivierungszeitpunkt in der Einheit h für Stunde und c für das molare Verhältnis Si : Al.

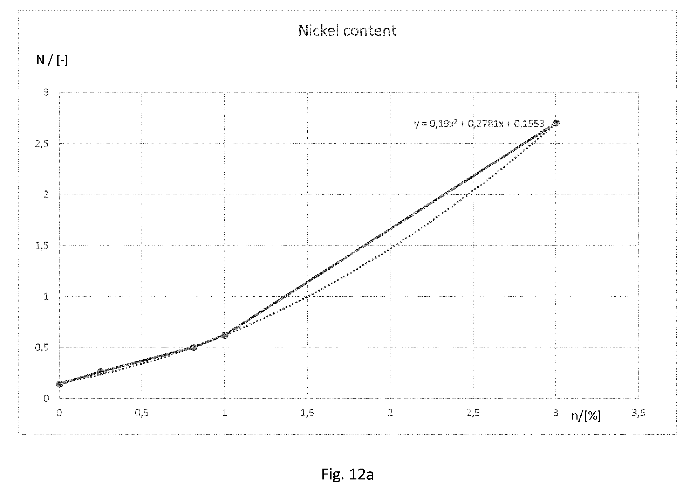

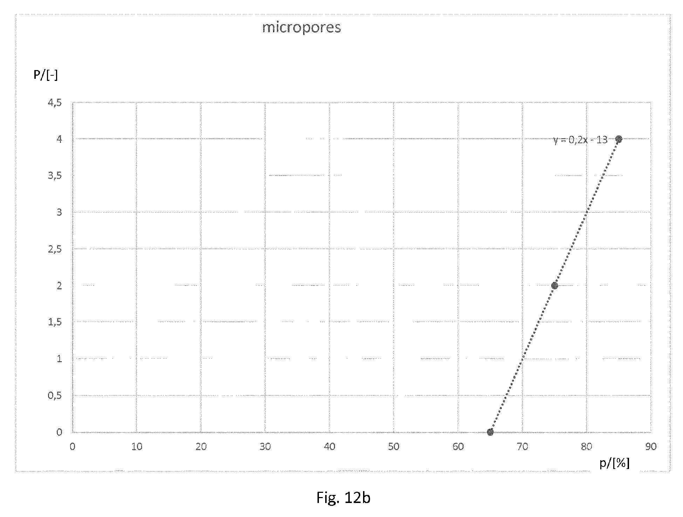

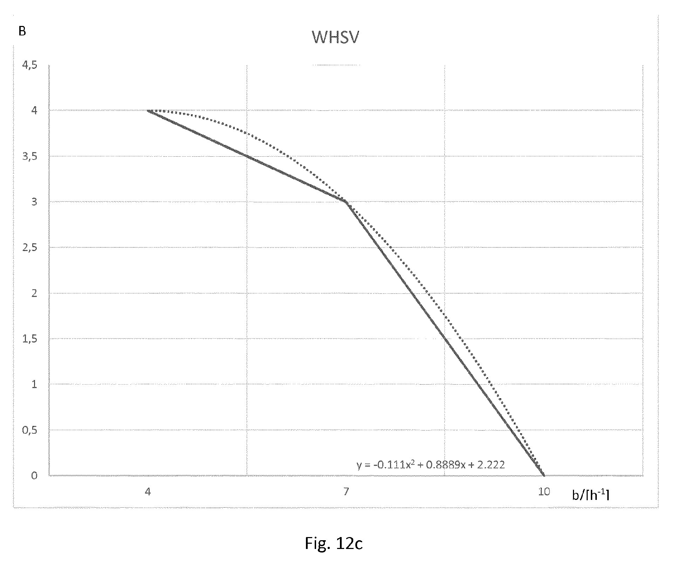

Dieser "Basiswert" in der Langzeitstabilität kann multiplikatorisch durch den Nickelgehalt c, den Mikroporenanteil p des Katalysators und durch die Katalysatorbelastung b variiert werden, was in den Figuren 12a, 12b und 12c (NiMo/(Al-MCM-41/ZSM-5), (3.0 Gew.-% Mo, 0 bis 5 Gew.-% Ni), c = 25, p= 30% bis 90 %, 500 °C, $5*10^5$ Pa, b = 4 $h^{-1}$ bis $10h^{-1}$) dargestellt ist.

Man erkennt, dass durch die Syntheseparameter sowie die Rektionsbedingungen die Langzeitstabilität und das Produktspektrum des Katalysators in einem weiten Bereich eingestellt werden kann. Die Anwendung der Regenerationsstrategien kann im Anschluss daran während der Reaktion durch die Einstellung der Aktivität des Katalysators das Produktspektrum ansteuern.

Die in Figur 12a aufgetragenen Messwerte Einflussfaktor Nickelgehalt N über den Nickelgehalt n lassen sich mit einem Polynom 2. Ordnung interpolieren zu der Formel [2]:

$$N=0.19*n^2+0.2781*n+0.1553 \qquad [2]$$

In Formel [2] steht n für den Nickelgehalt des Katalysators angegeben in Gewichts-% und N ist der dimensionslose Einflussfaktor des Nickelgehalts auf den Desaktivierungszeitpunkt.

Die in Figur 12b aufgetragenen Messwerte Einflussfaktor Porenvolumen P über den Volumenanteil der Mikroporen p lassen sich linear interpolieren zu der Formel [3]:

$$P=0.2*p-13 \qquad [3]$$

In Formel [3] steht p für den Volumenanteil der Mikroporen innerhalb des Porenvolumens des Materials angegeben in % und P ist der dimensionslose Einflussfaktor des Porenvolumens auf den Desaktivierungszeitpunkt.

Die in Figur 12c aufgetragenen Messwerte Einflussfaktor Katalysatorbelastung B über die stündliche Katalysatorbelastung (weight hourly space velocity WHSV) b lassen sich mit einem Polynom 2. Ordnung interpolieren zu der Formel [4]:

$$B=-0.1111*b^2+0.8889*b+2.222 \qquad [4]$$

In Formel [4] steht b für die stündliche Katalysatorbelastung (weight hourly space velocity WHSV) angegeben in der Einheit $h^{-1}$ und B ist der dimensionslose Einflussfaktor der Katalysatorbelastung auf den Desaktivierungszeitpunkt.

Wie oben geschildert, gehen Nickelgehalt c, Mikroporenvolumenanteil p und die Katalysatorbelastung b multiplikatorisch auf die Desaktivierungsdauer ein. Mithin sind die Einflussfaktoren N, P und B aus den Formeln [2], [3] und [4] mit der Basisformel [0] für die Bestimmung des Desaktivierungspunktes zu multiplizieren.

Um die Interpolationsfehler auszugleichen, wird zudem noch ein dimensionsloser Sicherheitsfaktor S aufgeschlagen mit einem Wert zwischen 0.8 und 1.2. Damit ergibt sich insgesamt für die Bestimmung des Desaktivierungszeitpunkts die Formel [1]:

$$T = S*N*P*B*(3.0647*\ln(c)+0.9519)\ h \qquad [1]$$

Mit Hilfe der Formeln [1] bis [4] kann somit in Kenntnis des Silicum/Aluminium-Verhältnisses $c$, des Mikroporenvolumenanteils $p$ und der Katalysatorbelastung $b$ der Desaktivierungszeitpunkt $T$ in Stunden h berechnet werden.

Anwendung der Regeneration

Über unterschiedliche Regenerationsstrategien kann das Produktspektrum variiert werden.

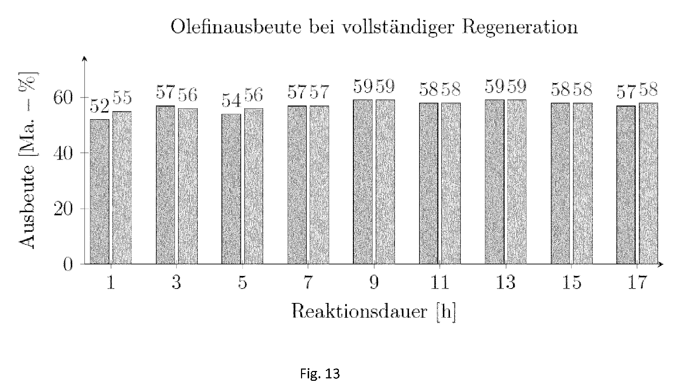

In Figur 13 (NiMo/(Al-MCM-41/ZSM-5), 6.9 Gew.-% Mo, 1.3 Gew.-% Ni, c= 25, 500 °C, 5*10$^5$ Pa, b = 10h$^{-1}$, Regeneration alle 2 Stunden) ist ein Beispiel einer vollständigen Koksentfernung dargestellt. Es zeigt sich, dass durch die Anwendung einer hochfrequentierten Regeneration die Ausbeute an Olefinen konstant gehalten werden kann, ohne Ermüdungserscheinungen des Katalysators zu beobachten.

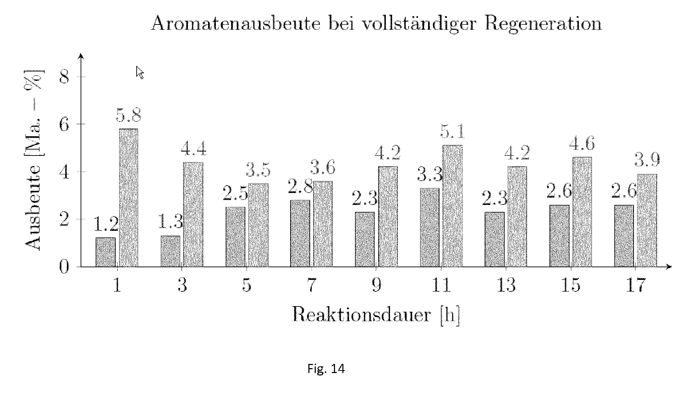

In Figur 14 (NiMo/(Al- MCM-41/ZSM-5), 6.9 Gew.-% Mo, 1.3 Gew.-% Ni, c= 25, 500 °C, 5*10$^5$ Pa, b = 10h$^{-1}$, Regeneration alle 2 Stunden) ist die Ausbeute an Aromaten während der gleichen Reaktion dargestellt. Daraus ist zu erkennen, dass nach einer oxidativen Regeneration die Ausbeute stets einen höheren Wert annimmt als vor der Regeneration. Dieser Befund spricht dafür, dass es während der Reaktion stets zu einer Abnahme der Aktivität bezüglich der Aromatenbildung kommt, die durch eine Regeneration wiederhergestellt werden kann. Diese beiden Beispiele belegen die erfindungsgemäße Anwendung der Regenerationsstrategien aus Figur 5, in der ein Hin- und Herschalten zwischen zwei Katalysatoraktivitäten und -selektivitäten durch Regenerationszyklen mit einer bestimmten Zyklusdauer exemplarisch demonstriert worden ist.

**Patentansprüche**

1. Kombiniertes Verfahren zum Herstellen eines Produktgemisches durch Cracken von mindestens einem Oxygenat an einem heterogenen Katalysator in Gegenwart von zumindest einem Gas und zur Regeneration des Katalysators mit den folgenden Merkmalen:

    a) das Produktgemisch enthält Alkene, Alkane und Aromaten;

    b) bei dem Oxygenat handelt es sich um eine Substanz, die ausschließlich aus Kohlenstoff, Wasserstoff und Sauerstoff besteht;

    c) zumindest ein Teil des Oxygenats liegt beim Cracken in der Gasphase vor;

    d) der Katalysator enthält ein Material, welches sich aus einer mikroporösen ZSM-5-Phase und aus einer mesoporösen Al-MCM-41-Phase zusammensetzt, wobei das molare Verhältnis von Silicium zu Aluminium innerhalb dieses Materials sich zu dem Wert $c$ bestimmt, wobei c mindestens 25 beträgt und wobei der Volumenanteil der Mikroporen innerhalb des Porenvolumens des Materials sich zu dem prozentualen Wert $p$ bestimmt, dessen Betrag zwischen 24 % und 99 % liegt;

    e) der Katalysator enthält des Weiteren Nickel und Molybdän, wobei der Massenanteil an Nickel bezogen auf die Gesamtmasse des Katalysators sich zu dem prozentualen Wert $n$ bestimmt, dessen Betrag zwischen 0 % und 5 % liegt;

    f) bei dem Gas handelt es sich wahlweise um Wasserstoff oder um Sauerstoff oder um Stickstoff oder um ein Gasgemisch aus Sauerstoff und Stickstoff oder um ein Gasgemisch aus Stickstoff und Wasserstoff;

    g) das Verfahren ist dafür eingerichtet, zumindest drei unterschiedliche Betriebszustände einzunehmen, nämlich einen Crack-Betrieb, einen Spül-Betrieb und einen Regenerations-Betrieb;

    h) bei der Durchführung des Verfahrens wird sequenziell zwischen den Betriebszuständen gewechselt, dergestalt, dass auf den Crack-Betrieb der Spül-Betrieb, auf den Spül-Betrieb der Regenerations-Betrieb und auf den Regerations-Betrieb der Crack-Betrieb folgt;

    i) Abhängig von dem jeweiligen Betriebszustand wird das Gas folgendermaßen gewählt:

      • Im Crack-Betrieb wird als Gas Wasserstoff oder Stickstoff oder ein Gasgemisch aus Wasserstoff und Stickstoff gewählt,
      • im Spül-Betrieb wird als Gas Stickstoff gewählt,
      • im Regenerations-Betrieb wird als Gas Sauerstoff oder ein Gasgemisch aus Stickstoff und Sauerstoff gewählt;

j) der Spül-Betrieb und der Regenerations-Betrieb erfolgen in Abwesenheit des Oxygenats;
k) der Crack-Betrieb erfolgt bei einer stündlichen Katalysatorbelastung (weight hourly space velocity WHSV), die den Wert $b$ annimmt, dessen Betrag zwischen 4 h⁻¹ und 10 h⁻¹ liegt;
l) der Crack-Betrieb erfolgt über einen Zeitraum $t$, dessen Dauer kürzer ist als der aus Formel [1] berechnende Desaktivierungspunkt T:

$$T = S*N*P*B*(3.0647*\ln(c)+0.9519)\ h \qquad [1]$$

wobei S eine Zahl zwischen 0.8 und 1.2 darstellt,
wobei N aus der Formel [2] wie folgt berechnet wird:

$$N = 0.19*n^2 + 0.2781*n + 0.1553 \qquad [2]$$

wobei P aus der Formel [3] wie folgt berechnet wird:

$$P = 0.2*p - 13 \qquad [3]$$

wobei B aus der Formel [4] wie folgt berechnet wird:

$$B = -0.1111*b^2 + 0.8889*b + 2.222 \qquad [4]$$

2.  Verfahren nach Anspruch 1, **dadurch gekennzeichnet, dass** der Wert $c$ größer ist als 50, dass der Wert $n$ zwischen 0 und 1 % liegt und dass der Crack-Betrieb bei einer Temperatur zwischen 450°C und 550°C und einem Druck zwischen $3*10^5$ Pa und $7*10^5$ Pa erfolgt.

3.  Verfahren nach Anspruch 1 oder 2, **dadurch gekennzeichnet, dass** es sich bei dem Oxygenat um einen Ether oder um einen Ester oder um eine ungesättigte Fettsäure handelt, oder dass es sich bei dem Oxygenat um ein Gemisch aus mehreren Substanzen ausgewählt aus diesen Stoffklassen handelt.

4.  Verfahren nach Anspruch 1 oder Anspruch 2 oder Anspruch 3, **dadurch gekennzeichnet, dass** der Zeitraum $t$, über den der Crack-Betrieb erfolgt, 75 % bis 95 % des Desaktivierungspunktes $T$ beträgt.

5.  Verfahren nach Anspruch 1 oder Anspruch 2 oder Anspruch 3, **dadurch gekennzeichnet, dass** der Zeitraum $t$, über den der Crack-Betrieb erfolgt, 15 % bis 25 % des Desaktivierungspunktes $T$ beträgt.

6.  Verfahren nach Anspruch 1 oder einem der Ansprüche 2 bis 5, **dadurch gekennzeichnet, dass** der Betrag des prozentualen Wertes $p$ zwischen 30 % und 90 % liegt; gemessen nach der t-Plot-Methode und korrigiert nach der Methode von Galarneau et al..

7.  Verfahren nach Anspruch 1 oder einem der Ansprüche 2 bis 6, **dadurch gekennzeichnet, dass** der Katalysator zusätzlich Platin enthält.

Fig. 1

Fig. 2

Fig. 3

Fig. 4

Fig. 5a

Fig. 5b

Spaltaktivität mit Rapsöl

Fig. 6a

Spaltaktivität mit Ethyllaurat

Fig. 6b

Fig. 7

Umsatz von Ethyllaurat

Fig. 8a

Ausbeute kurzkettiger Olefine

Fig. 8b

Fig. 9a

Aromaten und Paraffine

Fig. 9b

## Einfluss des Nickelgehaltes

Fig. 10

Fig. 11

Fig. 12a

Fig. 12b

Fig. 12c

Olefinausbeute bei vollständiger Regeneration

Fig. 13

Fig. 14

Europäisches Patentamt
European Patent Office
Office européen des brevets

## EUROPÄISCHER RECHERCHENBERICHT

Nummer der Anmeldung

EP 16 19 0331

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | GILLE T ET AL: "Influence of metal loading on hydrocracking of rapeseed oil using bifunctional micro/mesoporous composite materials DGMK-Conference "New technologies and alternative feedstocks on petrochemestry and refining", PREPRINTS OF THE DGMK-CONFERENCE "NEW TECHNOLOGIES AND ALTERNATIVE FEEDSTOCKS IN PETROCHEMISTRY AND REFINING", OCTOBER 9 - 11, 2013, DRESDEN, GERMANY : (AUTHORS' MANUSCRIPTS), DGMK, GERMAN SOCIETY FOR PETROLEUM AND COAL SCIENCE AND TECHNOLOGY, DE, Bd. 2013-2, 1. November 2013 (2013-11-01), Seiten 187-194, XP008183170, ISBN: 978-3-941721-32-6 * Seite 191 * ----- | 1-7 | INV. C10G3/00 B01J38/12 ADD. B01J29/00 B01J29/04 |
| A | YEAN-SANG OOI ET AL: "Catalytic Conversion of Fatty Acids Mixture to Liquid Fuel and Chemicals over Composite Microporous/Mesoporous Catalysts", ENERGY & FUELS., Bd. 19, Nr. 3, 1. Mai 2005 (2005-05-01), Seiten 736-743, XP055342696, WASHINGTON, DC, US. ISSN: 0887-0624, DOI: 10.1021/ef049772x * das ganze Dokument * ----- -/-- | 1-7 | |

RECHERCHIERTE SACHGEBIETE (IPC)

C10G
B01J
C07C

Der vorliegende Recherchenbericht wurde für alle Patentansprüche erstellt

| Recherchenort | Abschlußdatum der Recherche | Prüfer |
|---|---|---|
| Den Haag | 8. Februar 2017 | Veefkind, Victor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 16 19 0331

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | OLIVER BUSSE ET AL: "Hydrocracking of Ethyl Laurate on Bifunctional Micro-/Mesoporous Zeolite Catalysts", CHEMSUSCHEM, Bd. 3, Nr. 5, 30. April 2010 (2010-04-30), Seiten 563-565, XP055343005, DE ISSN: 1864-5631, DOI: 10.1002/cssc.200900234 * das ganze Dokument * | 1-7 | |
| A | Gille T, Busse O, Reschetilowski W,: "Poster I-PP15: "Regeneration and Activation Studies with NiMo(Al-MCM-41/ZSM-5) Catalyst System for Hydrocracking of Biogenic Residues", Europacat XII , 30. August 2015 (2015-08-30), Seite FP, 10, 121,298, XP002766826, Kazan, Russia Gefunden im Internet: URL:http://www.catalysis.ru/resources/institute/Publishing/Report/2015/Program+Short_Abstracts+Advertisement+Exhibition-EuropaCat-XII-2015.pdf [gefunden am 2017-02-08] * Seite 298 * | 1-7 | RECHERCHIERTE SACHGEBIETE (IPC) |
| A | CN 104 998 668 A (INST PROCESS ENG CAS) 28. Oktober 2015 (2015-10-28) * Zusammenfassung * * Absatz [0026] * | 1-7 | |

Der vorliegende Recherchenbericht wurde für alle Patentansprüche erstellt

| Recherchenort | Abschlußdatum der Recherche | Prüfer |
|---|---|---|
| Den Haag | 8. Februar 2017 | Veefkind, Victor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 16 19 0331

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2017

| Im Recherchenbericht angeführtes Patentdokument | Datum der Veröffentlichung | Mitglied(er) der Patentfamilie | Datum der Veröffentlichung |
|---|---|---|---|
| CN 104998668 A | 28-10-2015 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. BUSSE ; K. RÄUCHLE ; W. RESCHETILOWSKI.** Hydrocracking of Ethyl Laurate on Bifunctional Micro-/Mesoporous Zeolite Catalysts. *ChemSusChem,* 2010, vol. 3 (5), 563-565
- **T. GILLE ; O. BUSSE ; W. RESCHETILOWSKI.** Influence of metal loading on hydrocracking of rapeseed oil using bifunctional micro/mesoporous composite materials DGMK-Conference ''New technologies and alternative feedstocks on petrochemestry and refining. *DGMK-Tagungsbericht,* Februar 2013, 187-194
- **ANNE GALARNEAU ; FRANÇOIS VILLEMOT ; JEREMY RODRIGUEZ ; FRANÇOIS FAJULA.** Benoit Coasne: Validity of the t-plot Method to Assess Microporosity in Hierarchical Micro/Mesoporous Materials. *Langmuir,* 2014, vol. 30, 13266-13274